# EUROPEAN PATENT SPECIFICATION

(11) **EP 2 117 200 B1**
(45) Date of publication and mention of the grant of the patent: **01.02.2012**
(21) Application number: 08155931.2
(22) Date of filing: 08.05.2008
(51) Int. Cl.: H04L 29/06

(54) **Method and apparatus for broadcast authentication**
Verfahren und Vorrichtung zur Rundfunkauthentifizierung
Procédé et appareil pour l'authentification de la diffusion

(43) Date of publication of application: 11.11.2009
(73) Proprietor: NTT DoCoMo, Inc., Tokyo (JP)
(72) Inventor: Zugenmaier, Alf, 81241 Munich (DE); Aad, Imad, 80689 Munich (DE)
(74) Representative: Betten & Resch

(56) References cited:
- PERRIG ET AL: "TESLA: Multicast Source Authentication Transform Introduction; draft-ietf-msec-tesla-intro-04.txt" IETF STANDARD-WORKING-DRAFT, INTERNET ENGINEERING TASK FORCE, IETF, CH, vol. msec, no. 4, 1 December 2004 (2004-12-01), XP015038690 ISSN: 0000-0004
- KO ET AL: "MIKEY: Multimedia Internet KEYing <draft-ietf-msec-mikey-00.txt>" ET ENGINEERING TASK FORCE INTERNET DRAFT, XX, XX, 1 November 2001 (2001-11-01), pages 1-37, XP002202866

## Description

### FIELD OF INVENTION

The present invention relates to a method and an apparatus for authenticating broadcast messages.

### BACKGROUND OF THE INVENTION

ETWS (Earthquake and Tsunami Warning System) is a subset of the public warning system PWS with restriction to the requirements that are of importance to the Japanese Earthquake and Tsunami Warning System,

For such a kind of ETWS warning system there are two main threats:
1.) Spoofing of a warning message, where an attacker sends a bogus warning message.
2.) Replaying a warning message at a later time.
both of which can be used by an attacker to trigger an "emergence behavior" of a user, therefore compromising his security/safety.

The problem is that the message to be broadcast has only a limited length (in terms of number of bits), and therefore the amount of information which can be used to ensure security or authentication is limited.

It is therefore an object of the present invention to provide an authentication even in such an environment where the number of available bits is comparatively small. In one more specific aspect the problem is how to share a secret between the signing authority and the user equipment UE to maximize security even if the signature created with the shared secret is relatively small, i.e. in the order of only a few tens of bits.

Document PERRIG et al: "TESLA: Multicast Source Authentication Transform Introduction"; draft-ietf-msec-tesla-intro-04.txt" IETF STAN DARD-WORKI N G-DRAFT, INTERNET ENGINEERING TASK FORCE, IETF, CH, vol. msec, no. 4, 1 December 2004 (2004-12-01), XP 015038690 ISSN: 0000 - 0004 discloses a technology which allows to check the integrity and to authenticate the source of each packet in multicast or broadcast data streams by all receivers. However, TESLA does in particular not provide security for the key to be transmitted to the receivers. Furthermore, TESLA can not handle situations wherein a receiver is moved between different multicast or broadcast domains and tries to verify the authenticity of a received packet.

### SUMMARY OF THE INVENTION

The present invention is defined in the independent claims. The dependent claims form advantageous embodiments of the invention.

According to one embodiment of the prior art a method for authenticating a broadcast message to be transmitted to a user equipment, wherein said broadcast message is signed by a signing authority for authentication, said method comprising:
using a master key which is shared between the signing authority and the user equipment to derive based thereupon a signing key for signing the message to be authenticated;
signing the message to be authenticated by said signing key and verifying the signature by said user equipment, wherein
said master key is regularly updated, and
said master key is sent from said signing authority to said user equipment in encrypted form by using an encryption key, said encryption key being a secret key shared between said user equipment and the network sending said master key.

The regular update of the master key and sending this update to the user equipment in encrypted form enables the system to keep the signing key changing and thereby making attacks on the system mote difficult.

According to one embodiment, if said user equipment is in its home network said encryption key is a home key shared between a trusted node in the home network of said user equipment and said user equipment, and
if said user equipment is located in a visited network said encryption key is a key which has been derived based on said home key of said user equipment.

This enables the distribution of the master key to the user equipment in secure form, even if the user equipment is in a foreign network where it shares no secret with a trusted node.

According to one embodiment said encryption key is based on said home key and an identifier of said visited network if said user equipment is located in said visited network.

This makes the key for distributing the master key specific to the visited network.

According to one embodiment said master key is updated regularly and transmitted to said user equipment at a first time interval T, and said signing key is regularly updated at a second time interval t smaller than said first time interval.

The two time intervals, T for updating the master key and t for updating the signing key further enhance the security and make attacks even more difficult.

According to one embodiment said signing key is repeatedly updated by repeatedly applying the key derivation function to said master key or to an input which has been derived from the master key.

This enables an iterative or repetitive generation if the signing key using the same key derivative function.

According to one embodiment said signing key at a certain second time interval is derived based on applying said key derivation function on an input which is based on said master key and the signing key of the preceding second time interval.

This makes the signing key generation iterative which makes it particularly difficult to perform any attacks.

According to one embodiment said second time interval is indexed such that the n-th time interval is referred to as tn, and wherein the verification of said signature in said user equipment is not only performed for the currently valid second time interval tn but also for one or more neighboring time intervals.

This enables a verification by the user equipment even if its clock is not absolutely accurate so that it may be unable to determine the actual second time interval accurately.

According to one embodiment an indication of the currently valid second time interval t is transmitted together with said master key is sent from said signing authority to said user equipment.

In this manner the user equipment can be "synchronized" to the currently active second time interval t.

According to one embodiment there are multiplexed two paging messages onto the same time slot: one for those that are using the current MK(T) and one for the ones still not having been updated, thus using MK(T-1), each of these paging messages carrying a valid signature, derived from the two different keys.

In this manner synchronization of *T* can be performed.

According to one embodiment the method further comprises:
sending a signal to the user equipment equipment or a protected environment in the user equipment to signalize advance to the next time slot.

This may be useful if the user equipment is unable to determine the actual time slot.

According to one embodiment said user equipment performs rate limitation on the number of attempts to verify a signature; and /or
said user equipment performs an operation to detect over-clocking.

This further enhances the security of the system.

According to one embodiment the master key depends on the broadcast group, i.e. the paging group.

This further enhances the security of the system.

According to one embodiment there is provided an apparatus for authenticating a broadcast message to be transmitted to a user equipment, wherein said broadcast message is signed by a signing authority for authentication, said apparatus comprising:
a module for using a master key which is shared between the signing authority and the user equipment to derive based thereupon a signing key for signing the message to be authenticated;
a module for signing the message to be authenticated by said signing key to enable verifying the signature by said user equipment;
a module for regularly updating said master key, and
a module for sending said master key from said signing authority to said user equipment in encrypted form using an encryption key, said encryption key being a secret key shared between said user equipment and the network sending said master key.

In this manner a node or entity in the network which performs sending of a message to be authenticated can be implemented.

According to one embodiment there is provided an apparatus for authenticating a broadcast message to be reveived by a user equipment, wherein said broadcast message is signed by a signing authority for authentication, said apparatus comprising:
a module for using a master key which is shared between the signing authority and the user equipment to derive based thereupon a signing key for signing the message to be authenticated;
a module for decrypting the signature which has been signed using said signing key to verifying the signature by said user equipment;
a module for regularly receiving updates of said master key which is sent from said signing authority to said user equipment in encrypted form using an encryption key, said encryption key being a secret key shared between said user equipment and the network sending said master key.

In this manner a node or entity such as a user equipment or a terminal in the network which performs authentication of a message according to an embodiment of the invention can be implemented.

According to one embodiment there is provided an apparatus which further comprises:
one or more modules to perform a method according to any of the embodiments of the invention.

According to one embodiment there is provided a computer program comprising computer program code which when being executed on a computer enables said computer to carry out a method according to any of the embodiments of the invention.

### BRIEF DESCRIPTION OF THE DRAWINGS

Fig. 1 schematically illustrates a transmission sequence for transmitting a warning message.
Fig. 2 schematically illustrates a bit sequence of the message to be used in an embodiment of the invention.
Fig. 3 schematically illustrates an environment in which an embodiment of the invention may be used.
Fig. 4 schematically illustrates a message flow according to an embodiment of the invention.
Fig. 5 schematically illustrates time intervals used in an embodiment of the invention.

### DETAILED DESCRIPTION

The public warning system ETWS proposes a two-stage warning system of primary notification and secondary notification. In the following embodiments it will be explained how the principles of the present invention may be applied to such a kind of warning system. According to one embodiment this document is directed to the so-called "primary notification" of the ETWS. However, in general the mechanism can be reused for all kinds of broadcast system requiring authentication.

According to one embodiment the message which is to be authenticated (e.g. the primary notification of ETWS) may be secured with a shared key of limited length. In one embodiment there is provided a key scheduling mechanism which serves a twofold purpose: Increasing security of the key against brute force attack and limiting potential replay attacks to a short time window. This will now be explained in more detail in the following.

For signing, the authority which sends the warning message (e.g. the warning notification provider, the aggregator which aggregates messages from a wireless network, or the public land mobile network PLMN) uses a regularly updated shared secret, which is shared between the signing authority and a confidentiality-preserving, tamper-proof environment on the UE. This environment in the UE also needs to offer the function of verifying the authentication information in the warning using this shared secret.

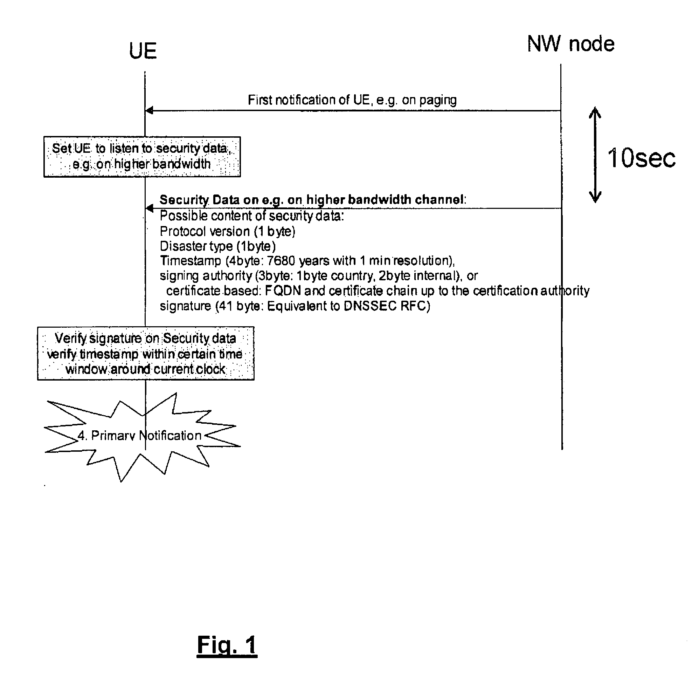

Fig. 1 illustrates schematically the authentication as it may be executed in an ETWS. After the first notification the user equipment UE is set to listen to the security data, e.g. on a higher bandwidth. Then the security data is transmitted on a higher bandwidth channel which may include the data as illustrated in Fig. 1. This may include the protocol version (1 byte), the disaster type (1 byte), a timestamp (4 bytes for 7860 years with 1 minute resolution), the identification of the signing authority (3 bytes, 1 for the country and 2 for internal identification). Alternatively it may include a fully qualified domain name FQDN with a certificate chain up to the signing authority (e.g. DNSSEC).Then the signature of the security data which may include the timestamp is verified, e.g. within a certain time window around the current clock time.

However, the primary notification may already be sent with the paging message and needs to be authenticated within the same message. In such a case there is only a very limited amount of information (in terms of available number of bits) available for the message itself and for authenticating it.

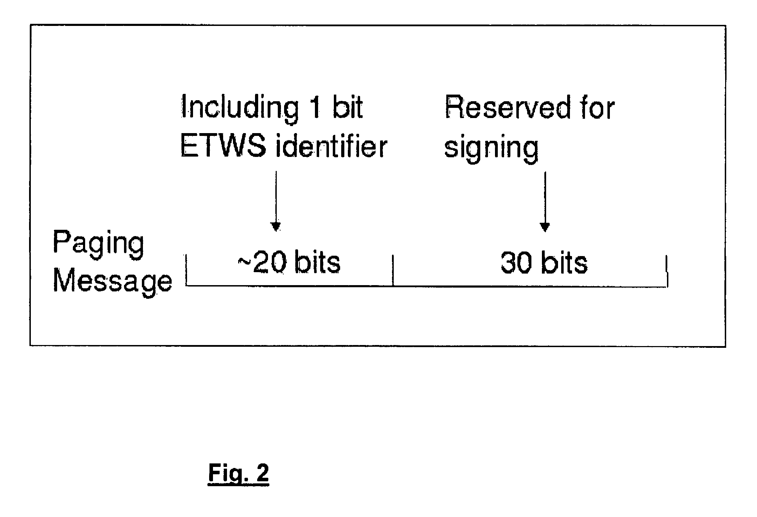

Fig. 2 schematically illustrates the bit resources available for such a method. One can see that around 20 bits are to be used for the "payload" of the paging message and about 30 bits may be used for the signing.

With such a limited number of bits for the signatures replay attacks would be possible. However, the mechanism according to the embodiments of the invention reduces the risk of such kind of attacks, as will be explained in more detail below.

According to one embodiment there is provided a mechanism which performs a periodic updating of the shared secret between a signing authority and the UE. A key hierarchy is used to derive a signing key from the shared secret.
Several mechanisms may be used to protect the signing key, e.g.:
- Different master keys per visited network's signing authority and per UE
- Low frequency unicast update of a shared secret (e.g. once per month or once per day)
- More frequent update of signing key by the use of one way functions (e.g. once per minute)
- Rate limitation of signature verification to prevent brute force attacks

These mechanisms will be explained in somewhat more detail below.

With the mechanism proposed there can be achieved a reasonably high security even with only very few bits reserved for security in the actual notification message.

By frequent key updates the security of the solution can be increased by up to 40%, when the security is measured in time until the attacker has a 50% chance of breaking the signature.
Frequent key updates also shorten the time period during which the attacker can replay a warning message, therefore reducing the impact of replayed message.

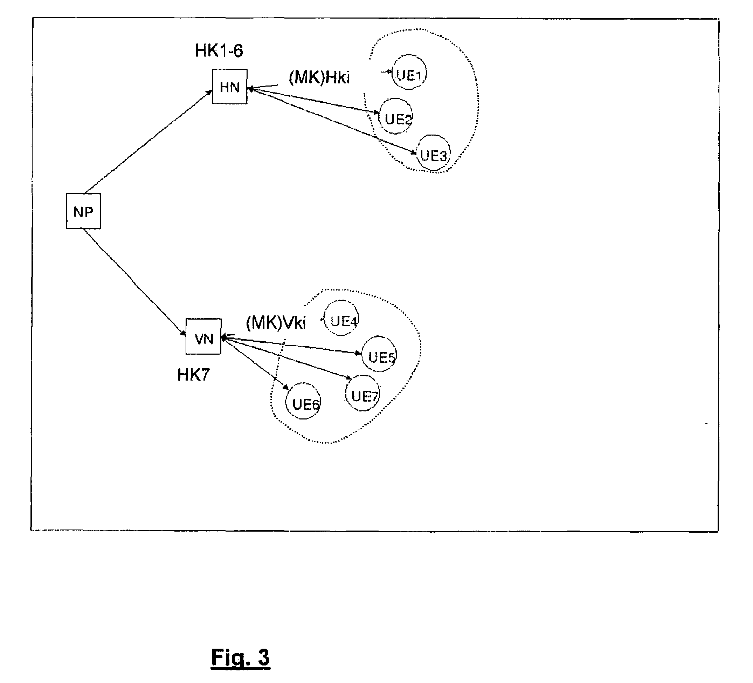

In Fig. 3 there is schematically illustrated an environment in which the present invention may be used a Notification Provider NP may be the source of the warning message and may want to distribute it through multiple networks, one being the home network HN for nodes UE1 to UE6 and another network VN which is the home network for node UE7 but which is a visited network for nodes UE4 to UE6 whose home network is HN.

Each user equipment has an associated Home key. This is a shared secret which the UE shares with a trusted node in the home network (e.g. the home subscriber serve HSS). The home key HJ is specific for the UE and its home network. This is illustrated in Fig. 3 as HK1 to HK7, the home keys HK1 to HK6 belong to UE1 to UE6 and their home network HN, respectively, and the home key HK7 belongs to the UE7 and the network VN which is the home network for UE7.

Furthermore, all nodes which are registered with a given operator share a common key MK (or master key MK) with the operator. This key is updated regularly.

For authenticating the warning message a signing key SK is used. This signing key is derived based on the master key used in the area in which the UE is currently registered, e.g. by applying a key derivative function KDF. The master key may be sent in encrypted form to the UE, e.g. encrypted by using the home key if the UE is in the home network, or by encrypting it using a visited network key VKn if the UE is in a visited network.

The procedure is schematically illustrated in Fig. 3, where the master key MK is transmitted from the HN to the UE1, UE2, and UE3 by encrypting it with the respective home key of these UEs. For the UE4, UE5, and UE6, however, the network and the UE do not share a home key, and therefore instead a visited network key VK has to be used to encrypt the master key which is valid for the visited network before transmitting it to the UE4 to UE6. This is illustrated by (MK)Vki in Fig. 3 which indicates that the MK is encrypted using the respective visited network key Vki of the User equipments UE4 to UE6 before the MK is sent in encrypted form to these user equipments. Alternatively, also even if the UE is in the home network a key which has been derived based on the home key-possibly derived in the same manner or based on the same alogorithm used for deriving the visited network key-can be used for encryption of the master key before sending it to the UE if the UE is in the home network.

For UE7, therefore, since the VN is the home network in one embodiment the home key HK can be used for encrypting the master key before sending it to the UE7, in another embodiment a key which has been derived based on the home key based on the same alogorithm used for deriving the visited network key is used for encrypting the master key before sending it to the UE7.

Based on the master key there can then be derived the signing key which is used to sign a message which is to be authenticated, and the sending node and the UE both may derive this signing key using the key derivative function on MK. The signing key is then used to sign on the network side a message to be authenticated, and on the side of the UE the signature is reproduced using the signing key to authenticate the message.

Now a further embodiment will be described in somewhat more detail.

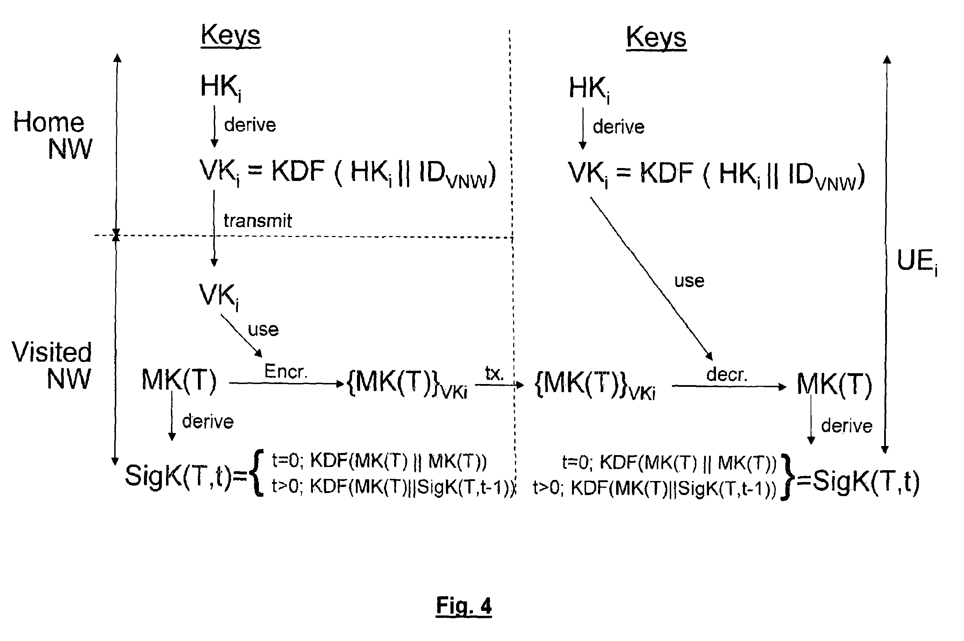

As depicted already in Fig. 3 and as also shown in Fig. 4, each UE shares one secret (*HKᵢ*) with a trusted node in the home network (HN), e.g. with a Home Subscriber Server HSS.

For nodes that are away from the home network (e.g. UE4, UE5, and UE6 in Fig. 3), with which the visited network (VN) has no shared keys, the signing authority in the visited network can request a key *VKᵢ* for the visiting node from its home network.

In a protected environment (e.g. UICC or a SIMcard), according to one embodiment the UE can derive this key *VKₗ* from *HKᵢ* and e.g. further based on the identity of the signing authority.

All nodes registered with a given operator share a common key MK with the operator. This key is updated on a regular basis.

The master key MK may be updated regularly so that it becomes time dependent which may be expressed by MK(T). This update may be performed in an interval of e.g. several hours, days or months. In one embodiment the update is performed every several days or months, or once within a day or a month.

The shared secret *MK(T)* of the visited network is transmitted in unicast to a protected environment in the UE using the visited network key VKᵢ. This shared secret MK(T) is shared between all UEs in the visited network.

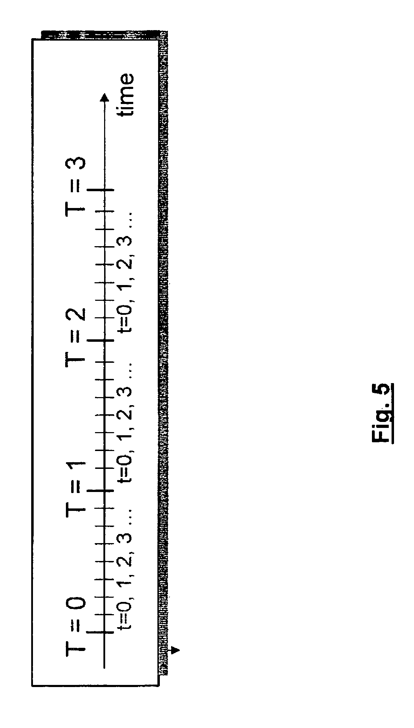

The shared secret *MK(T)* according to one embodiment is updated with low frequency as schematically illustrated in Fig. 5. It is transmitted to the user equipment in encrypted form, the key used for encryption is either the home key *HKᵢ* of the visited network key *VKᵢ*, depending on whether the mobile terminal UE is in the home network or the visited network. This encryption allows selective exclusion of rogue UEs.

The master key shared between the network and its nodes *MK(T)* is used to derive a signing key *SigK(T,t=0),* by using a key derivation function KDF, e.g. on *MK(T)* concatenated with itself: *SigK(T,t=0)=H(MK('T)*∥*MK(T)).* The master key needs not necessarily concatenated with itself, any other further input (e.g. a fixed number or bit sequence) may be used as well. Another possibility would be to just use the master key only for generating the signing key.

The KDF in one embodiment may just be a hash function.

The time interval T (which may be regarded as "first time interval") is the interval within which the master key MK(T) is updated. The updated master key may then be distributed to the different user equipments which are currently located in the area served by the transmitting station which transmits the warning message (and also the master key).

In addition to this update of the master key which forms the basis for deriving the signing key, the signing key may itself also be time dependent and may change within a time interval t (which may be regarded as "first time interval") smaller than T.

For that purpose, according to one embodiment each time interval T is divided into smaller time slices (cf. figure 2), indexed by lowercase t. *SigK(T,t=0)* is used for signing the message in the time slot t=0 of the validity of the master key MK. The signing key at a certain interval t may then be derived by iteratively applying the hash function to the master key or to an input which has been derived from the master key.

Together with the master key (or the master key updated) the signing authority may send the index of the current time interval t. In this manner the UE may be informed about the current time interval t which may be defined by the clock of the node or station which transmits the master key. Since the distribution of the master key to the different UEs should be carried out in a point-to-point manner, the user equipments may receive the master key at different times and therefore at different intervals t. By transmitting also an indication of the time interval t the user equipment may set its counting to the correct point in time, i.e. to the correct time interval t which is currently the valid one.

According to a specific embodiment, e.g. the signing key for *SigK(T,t)* is calculated by hashing the master key *MK(T)* concatenated with the previous signing key *SigK(T,t)=KDF(MK(T)*∥ *SigK(T,t-1)).* This signature key *SigK(T,t)* can be used for calculating a signature, e.g. by keying a hash function (HMAC) that can be used as a signature on the warning message. In one embodiment the last 30 bits of the signature are fitted into the early paging message, as shown in Fig. 2.

According to one embodiment verification of the signature will take into account that the time slots may not be perfectly aligned, thus the protected environment in the UE may e.g. calculate and compare the HMAC not only for the current value of *t* but also for the neighboring values of t.

According to one embodiment synchronization of *T* is performed by multiplexing two paging messages onto the same time slot: one for those that are using the current *MK(T)* and one for the ones still not having been updated, thus using *MK(T-1).* Each of these paging messages carries a valid signature, derived from the two different keys.

The protected environment might not be able to determine its time slot. Therefore, according to one embodiment it can receive an external signal to advance to the next time slot.

According to one embodiment the protected environment performs rate limitation on the number of attempts to verify a signature.

If the protected environment does not have a reliable clock, the protected environment might delay returning the result of the check for a predefined number of clock cycles. To do this, the protected environment may be provided with a module to detect over-clocking.

A further enhancement could be implemented by making the key MK(T) dependent on the broadcast group, i.e. the paging group.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a mechanism as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the mechanism as described before.

## Claims

1. A method for authenticating a broadcast message to be transmitted to a user equipment, wherein said broadcast message is signed by a signing authority for authentication, said method comprising:
using a master key which is shared between the signing authority and the user equipment to derive based thereupon a signing key for signing the message to be authenticated;
signing the message to be authenticated by said signing key and verifying the signature by said user equipment, wherein
said master key is regularly updated, and
said master key is sent from said signing authority to said user equipment in encrypted form using an encryption key, said encryption key being a secret key shared between said user equipment and the network sending said master key.

2. The method of claim 1, wherein
if said user equipment is in its home network said encryption key is a home key shared between a trusted node in the home network of said user equipment and said user equipment, and
if said user equipment is located in a visited network said encryption key is a key which has been derived based on said home key of said user equipment.

3. The method of claim 2, wherein said encryption key is based on said home key and an identifier of said visited network if said user equipment is located in said visited network.

4. The method of one of the preceding claims, wherein
said master key is updated regularly and transmitted to said user equipment at a first time interval T, and
said signing key is regularly updated at a second time interval t smaller than said first time interval.

5. The method of claim 4, wherein
said signing key is repeatedly updated by repeatedly applying the key derivation function to said master key or to an input which has been derived from the master key.

6. The method of claim 4 or 5, wherein
said signing key at a certain second time interval is derived based on applying said key derivation function on an input which is based on said master key and the signing key of the preceding second time interval.

7. The method of one of claims 4 to 6, wherein said second time interval is indexed such that the n-th time interval is referred to as tn, and wherein the verification of said signature in said user equipment is not only performed for the currently valid second time interval tn but also for one or more neighboring time intervals.

8. The method of one of claims 4 to 7, wherein
an indication of the currently valid second time interval t is transmitted together with said master key is sent from said signing authority to said user equipment.

9. The method of one of the preceding claims, comprising:
multiplexing two paging messages onto the same time slot: one for those that are using the current master key MK(T) and one for the ones still not having been updated, thus using master key *MK(T-1),* each of these paging messages carrying a valid signature, derived from the two different keys.

10. The method of one of the preceding claims, comprising:
sending a signal to the user equipment or a protected environment in the user equipment to signalize advance to the next time slot

11. The method of one of the preceding claims, wherein:
said user equipment performs rate limitation on the number of attempts to verify a signature; and /or
said user equipment performs an operation to detect over-clocking; and/or the master key depends on the broadcast group, i.e. the paging group.

12. An apparatus for authenticating a broadcast message to be transmitted to a user equipment, wherein said broadcast message is signed by a signing authority for authentication, said apparatus comprising:
a module for using a master key which is shared between the signing authority and the user equipment to derive based thereupon a signing key for signing the message to be authenticated;
a module for signing the message to be authenticated by said signing key to enable verifying the signature by said user equipment;
a module for regularly updating said master key, and
a module for sending said master from said signing authority to said user equipment in encrypted form using an encryption key, said encryption key being a secret key shared between said user equipment and the network sending said master key.

13. An apparatus for authenticating a broadcast message to be received by a user equipment, wherein said broadcast message is signed by a signing authority for authentication, said apparatus comprising:
a module for using a master key which is shared between the signing authority and the user equipment to derive based thereupon a signing key for signing the message to be authenticated;
a module for decrypting the message which has been signed using said signing key to verify the signature by said user equipment;
a module for regularly receiving updates of said master key which is sent from said signing authority to said user equipment in encrypted form using an encryption key, said encryption key being a secret key shared between said user equipment and the network sending said master key.

14. The apparatus of claim 12 or 13, further comprising:
a module to perform a method according to one of claims 2 to 11.

15. A computer program comprising computer program code which when being executed on a computer enables said computer to carry out a method according to one of claims 1 to 11.

## Patentansprüche

1. Ein Verfahren zum Authentifizieren einer Broadcast-Nachricht, die an eine Benutzervorrichtung übertragen werden soll, wobei die Broadcast-Nachricht durch eine Signierautorität zum Authentifizieren signiert wurde, wobei das Verfahren aufweist:
Verwenden eines Master-Schlüssels, der zwischen der Signierautorität und der Benutzervorrichtung geteilt wird, um basierend darauf einen Signierschlüssel zum Signieren der zu authentifizierenden Nachricht abzuleiten;
Signieren der Nachricht, die authentifiziert werden soll, durch den Signierschlüssel und Verifizieren der Signatur durch die Benutzervorrichtung, wobei
der Master-Schlüssel regulär upgedated wird, und
der Master-Schlüssel von der Signierautorität zu der Benutzervorrichtung in verschlüsselter Form unter Verwendung eines Verschlüsselungsschlüssels gesandt wird, wobei der Verschlüsselungsschlüssel ein geheimer Schlüssel ist, der zwischen der Benutzervorrichtung und dem Netzwerk, das den Master-Schlüssel sendet, geteilt wird.

2. Das Verfahren nach Anspruch 1, wobei
falls die Benutzervorrichtung in ihrem Heimatnetzwerk ist, der Verschlüsselungsschlüssel ein Home-Key ist, der zwischen einem vertrauenswürdigen Knoten in dem Heimatnetzwerk der Benutzervorrichtung und der Benutzervorrichtung geteilt wird, und
falls die Benutzervorrichtung in einem besuchten Netzwerk ist, der Verschlüsselungsschlüssel ein Schlüssel ist, der abgeleitet wurde basierend auf dem Home-Key der Benutzervorrichtung.

3. Das Verfahren nach Anspruch 2, wobei der Verschlüsseiungsschlüssel auf dem Home-Key und einem Identifizierer des besuchten Netzwerkes basiert, wenn die Benutzervorrichtung in dem besuchten Netzwerk sich befindet.

4. Das Verfahren nach einem der vorhergehenden Ansprüche, wobei
der Master-Schlüssel regulär upgedated wird und übertragen wird an die Benutzervorrichtung zu einem ersten Zeitintervall T, und
der Signierschlüssel regulär upgedated wird zu einem zweiten Zeitintervall t, das kleiner ist als das erste Zeitintervall.

5. Das Verfahren nach Anspruch 4, wobei
der Signierschlüssel wiederholt upgedated wird durch wiederholtes Anwenden der Schlüsselableitungsfunktion auf den Master-Schlüssel oder auf eine Eingabe, die von dem Master-Schlüssel abgeleitet wurde.

6. Das Verfahren nach Anspruch 4 oder 5, wobei
der Signierschlüssel zu einem bestimmten zweiten Zeitintervall abgeleitet wird basierend auf Anwenden der Schlüsselableitungsfunktion auf eine Eingabe, die basiert auf dem Master-Schlüssel und dem Signierschlüssel des vorgehenden zweiten Zeitintervalls.

7. Das Verfahren nach einem der Ansprüche 4 bis 6, wobei das zweite Zeitintervall so indexiert wird, dass das n-te Zeitintervall bezeichnet wird als tn und wobei die Verifikation der Signatur in der Benutzervorrichtung nicht nur durchgeführt wird für das momentan gültige zweite Zeitintervall tn, sondern auch für ein oder mehrere benachbarte Zeitintervalle.

8. Das Verfahren nach einem der Ansprüche 4 bis 7, wobei
eine Indikation des momentan gültigen zweiten Zeitintervalls t zusammen mit dem Master-Schlüssel übertragen und gesendet wird von der Signierautorität an die Benutzervorrichtung.

9. Das Verfahren nach einem der vorhergehenden Ansprüche, aufweisend:
Multiplexen zweier Paging-Nachrichten auf den selben Zeitslot, eine für diejenigen, die den momentanen Master-Schlüssel MK(T) verwenden und eine für diejenigen, die noch nicht upgedated wurden, so dass der Master-Schlüssel MK(T-1) verwendet wird, wobei jede der Paging-Nachrichten eine gültige Signatur trägt, die von den zwei unterschiedlichen Schlüsseln abgeleitet wurde.

10. Das Verfahren nach einem der vorhergehenden Ansprüche, aufweisend:
Senden eines Signals an die Benutzervorrichtung oder eine geschützte Umgebung in der Benutzervorrichtung, um das Fortschreiten zu dem nächsten Zeitslot zu signalisieren.

11. Das Verfahren nach einem der vorhergehenden Ansprüche, wobei
die Benutzervorrichtung eine Ratenlimitierung auf der Anzahl von Versuchen zur Verifikation einer Signatur durchführt; und/oder
die Benutzervorrichtung eine Operation durchführt, um Over-Clocking zu detektieren; und/oder
der Master-Schlüssel abhängt von der Broadcast-Gruppe, d. h. der Paging-Gruppe.

12. Eine Vorrichtung zum Authentifizieren einer Broadcast-Nachricht, die an eine Benutzervorrichtung übertragen werden soll, wobei die Broadcast-Nachricht durch eine Signierautorität zur Authentifizierung signiert wird, wobei die Vorrichtung aufweist:
Ein Modul zum Verwenden eines Master-Schlüssels, der geteilt wird zwischen der Signierautorität und der Benutzervorrichtung, um basierend darauf einen Signierschlüssel für die Signatur der Nachricht, die authentifiziert werden soll, abzuleiten;
ein Modul zum Signieren der Nachricht, die authentifiziert werden soll, durch den Signierschlüssel, um die Verifikation der Signatur durch die Benutzervorrichtung zu ermöglichen;
ein Modul zum regulären Updaten des Master-Schlüssels; und
ein Modul zum Senden des Master von der Signier-Autorität an die Benutzervorrichtung in verschlüsselter Form unter Verwendung eines Verschlüsseiungsschlüssels, wobei der Verschlüsselungsschlüssel ein geheimer Schlüssel ist, der geteilt wird zwischen der Benutzervorrichtung und dem Netzwerk, das den Master-Schlüssel sendet.

13. Eine Vorrichtung zum Authentifizieren einer Broadcast-Nachricht, die durch eine Benutzervorrichtung empfangen werden soll, wobei die Broadcast-Nachricht signiert wird durch eine Signierauthorität zur Authentifizierung, wobei die Vorrichtung aufweist:
Ein Modul zum Verwenden eines Master-Schlüssels, der geteilt wird zwischen der Signierautorität und der Benutzervorrichtung, um basieren darauf einen Signierschlüssel zum Signieren der zu authentifizierenden Nachricht abzuleiten;
ein Modul zum Entschlüsseln der Nachricht, die unter Verwendung des Signierschlüssels signiert wurde, um die Signatur durch die Benutzervorrichtung zu verifizieren;
ein Modul zum regulären Empfangen von Updates des Master-Schlüssels, der von der Signierautorität an die Benutzervorrichtung in verschlüsselter Form unter Verwendung eines Verschlüsselungsschlüssels gesendet wurde, wobei der Verschlüsselungsschlüssel ein geheimer Schlüssel ist, der geteilt wird zwischen der Benutzervorrichtung und dem Netzwerk, das den Master-Schlüssel sendet.

14. Die Vorrichtung nach Anspruch 12 oder 13, ferner aufweisend:
Ein Modul zum Durchführen eines Verfahrens gemäß einem der Ansprüche 2 bis 11.

15. Ein Computerprogramm aufweisend Computerprogrammcode, der, wenn er auf einem Computer ausgeführt wird, diesen in die Lage versetzt, ein Verfahren gemäß einem der Ansprüche 2 bis 11 auszuführen.

## Revendications

1. Procédé d'authentification d'un message de diffusion transmettre à un équipement utilisateur, dans lequel ledit message de diffusion est signé par une autorité de signature pour authentification, ledit procédé comprenant :
l'utilisation d'une clé maîtresse qui est partagée entre l'autorité de signature et l'équipement utilisateur pour en déduire une clé de signature permettant de signer le message à authentifier ;
signer le message authentifier par ladite clé de signature et vérifier la signature par ledit équipement utilisateur, dans lequel
ladite clé maîtresse est régulièrement mise à jour, et
ladite clé maîtresse est envoyée de ladite autorité de signature audit équipement utilisateur sous forme chiffrée en utilisant une clé de chiffrement, ladite clé de chiffrement étant une clé secrète partagée entre ledit équipement utilisateur et le réseau envoyant ladite clé maîtresse.

2. Procédé selon la revendication 1, dans lequel si ledit équipement utilisateur est dans son réseau domestique, ladite clé de chiffrement est une clé domestique partagée entre un noeud digne de confiance dans le réseau domestique dudit équipement utilisateur et ledit équipement utilisateur, et
si ledit équipement utilisateur est situé dans un réseau visité, ladite clé de chiffrement est une clé qui a été déduite de ladite clé domestique dudit équipement utilisateur.

3. Procédé selon la revendication 2, dans lequel ladite clé de chiffrement est basée sur ladite clé domestique et un identifiant dudit réseau visité si ledit équipement utilisateur est situé dans ledit réseau visité.

4. Procédé selon l'une des revendications précédentes, dans lequel
ladite clé maîtresse est mise jour régulièrement et transmise audit équipement utilisateur à un premier intervalle de temps T, et
ladite clé de signature est régulièrement mise à jour à un second intervalle de temps t plus petit que ledit premier intervalle de temps.

5. Procédé selon la revendication 4, dans lequel ladite clé de signature est mise à jour de façon répétée en appliquant de façon répétée la fonction de déduction de clé à ladite clé maîtresse ou à une entrée qui a été déduite de ladite clé maîtresse.

6. Procédé selon la revendication 4 ou 5, dans lequel
ladite clé de signature à un certain second intervalle de temps est déduite de l'application de ladite fonction de déduction de clé sur une entrée qui est basée sur ladite clé maîtresse et la clé de signature du second intervalle de temps précédent.

7. Procédé selon l'une des revendications 4 à 6, dans lequel ledit second intervalle de temps est indexé de telle sorte que le n-ième intervalle de temps soit désigné par tn, et dans lequel la vérification de ladite signature dans ledit équipement utilisateur est non seulement effectuée pour le second intervalle de temps tn actuellement valide mais également pour un ou plusieurs intervalles de temps voisins.

8. Procédé selon l'une des revendications 4 à 7, dans lequel
une indication du second intervalle de temps t actuellement valide est transmise conjointement avec l'envoi de ladite clé maîtresse de ladite autorité de signature audit équipement utilisateur.

9. Procédé selon l'une des revendications précédentes, comprenant :
le multiplexage de deux messages de radiomessagerie sur le même intervalle de temps : l'un pour ceux qui utilisent la clé maîtresse *MK*(*T*) actuelle et l'un pour ceux n'ayant pas encore été mis à jour, utilisant ainsi la clé *MK*(*T-1*), chacun de ces messages de radiomessagerie portant une signature valide, déduite des deux clés différentes.

10. Procédé selon l'une des revendications précédentes, comprenant :
l'envoi d'un signal à l'équipement utilisateur ou à un environnement protégé dans l'équipement utilisateur pour signaliser une progression vers l'intervalle de temps suivant.

11. Procédé selon l'une des revendications précédentes, dans lequel :
ledit équipement utilisateur effectue une limitation de taux sur le nombre de tentatives pour vérifier une signature ; et/ou
ledit équipement utilisateur effectue une opération visant à détecter un surcadençage ; et/ou la clé maîtresse dépend du groupe de diffusion, c'est-à-dire du groupe de radiomessagerie.

12. Appareil d'authentification d'un message de diffusion à transmettre à un équipement utilisateur, dans lequel ledit message de diffusion est signé par une autorité de signature pour authentification, ledit appareil comprenant :
un module permettant d'utiliser une clé maîtresse qui est partagée entre l'autorité de signature et l'équipement utilisateur pour en déduire une clé de signature permettant de signer le message à authentifier,
un module permettant de signer le message à authentifier par ladite clé de signature pour permettre la vérification de la signature par ledit équipement utilisateur,
un module permettant de mettre à jour régulièrement ladite clé maîtresse,
un module permettant d'envoyer ladite clé maîtresse de ladite autorité de signature audit équipement utilisateur sous forme chiffrée en utilisant une clé de chiffrement, ladite clé de chiffrement étant une clé secrète partagée entre ledit équipement utilisateur et le réseau envoyant ladite clé maîtresse.

13. Appareil d'authentification d'un message de diffusion à recevoir par un équipement utilisateur, dans lequel ledit message de diffusion est signé par une autorité de signature pour authentification, ledit appareil comprenant ;
un module permettant d'utiliser une clé maîtresse qui est partagée entre l'autorité de signature et l'équipement utilisateur pour en déduire une clé de signature permettant de signer le message à authentifier ;
un module permettant de déchiffrer le message qui a été signé en utilisant ladite clé de signature pour vérifier la signature par ledit équipement utilisateur ;
un module permettant de recevoir régulièrement des mises à jour de ladite clé maîtresse qui est envoyée de ladite autorité de signature audit équipement utilisateur sous forme chiffrée en utilisant une clé de chiffrement, ladite clé de chiffrement étant une clé secrète partagée entre ledit équipement utilisateur et le réseau envoyant ladite clé maîtresse.

14. Appareil selon la revendication 12 ou 13, comprenant en outre :
un module pour effectuer un procédé selon l'une des revendications 2 à 11.

15. Programme informatique comprenant un code de programme informatique qui, une fois exécuté sur un ordinateur, permet audit ordinateur de réaliser un procédé selon l'une des revendications 1 à 11.
